# EUROPEAN PATENT SPECIFICATION

(11) **EP 1 422 264 B1**
(45) Date of publication and mention of the grant of the patent: **16.04.2008**
(21) Application number: 02743850.6
(22) Date of filing: 05.07.2002
(51) Int. Cl.: C08L 27/06

(54) **PROCESSABILITY IMPROVER AND VINYL CHLORIDE RESIN COMPOSITION CONTAINING THE SAME**
VERARBEITBARKEITSVERBESSERER UND DIESEN ENTHALTENDE VINYLCHLORIDHARZZUSAMMENSETZUNG
AGENT AMELIORANT L'APTITUDE AU TRAITEMENT ET COMPOSITION DE RESINE DE CHLORURE DE VINYLE CONTENANT CET AGENT

(30) Priority: 10.07.2001 JP 2001209638
(43) Date of publication of application: 26.05.2004
(73) Proprietor: KANEKA CORPORATION, Osaka-shi, Osaka 530-8288 (JP)
(72) Inventor: SATO, Mitsutaka, Sanseiso, 31-17, Kobeshi-shi, Hyogo 655-0872 (JP); SUNAGAWA, Takenobu, Toyonaka-shi, Osaka 561-0872 (JP); KADOKURA, Mamoru, Himeji-shi, Hyogo 671-1242 (JP)
(74) Representative: Vossius & Partner
(86) International application number: PCT/JP2002/006875
(87) International publication number: WO 2003/006546

(56) References cited:
- WO-A1-00/12621
- JP-A- 4 266 958
- JP-A- 5 140 395
- JP-A- 6 240 086
- JP-A- 2001 031 826

## Description

The present invention relates to a polymer processing aid and a vinyl chloride resin composition containing the same.

Vinyl chloride resins are used as molding materials and the like taking advantage of their properties, but such vinyl chloride resins have several problems relating to processing, such that their thermal decomposition temperature is close to the processing temperature and that their fluidity is poor. Thus, there are many technologies to overcome these problems. Typical examples are a method of copolymerizing vinyl chloride with another monomer or a method of adding a plasticizer or another resin component to a vinyl chloride resin. However, these methods have disadvantage that it is impossible to solve processing problems with maintaining excellent physical and chemical properties vinyl chloride resins originally have. For example, when a plasticizer is added to a vinyl chloride resin, or when a vinyl chloride is copolymerized with another monomer, mechanical strength of molded articles is inferior. In addition, though the method of adding another resin component to a vinyl chloride resin often improves processability apparently by lowering the melt viscosity of the resin, compatibility between the other resin component and the vinyl chloride resin is poor, and thus gelation is insufficient, resulting in the fact that mechanical properties and transparency of molded articles to be obtained are inferior.

On the other hand, a method is proposed in which a copolymer comprising methyl methacrylate as a main component is added to a vinyl chloride resin as a processing aid in order to promote gelation at mold-processing of a vinyl chloride resin and to improve appearance of molded articles. This method makes it possible to obtain a vinyl chloride resin molded article having high gelation degree and improve processability with maintaining mechanical properties and transparency of the molded article. Furthermore, since the molded article has improved elongation at break at high temperature, not only deep drawing but also vacuum molding and profile extrusion become available. By adding such a conventional processing aid to a vinyl chloride resin composition, air mark can be decreased at calender molding and the like into a sheet. However, there is also a defect that flow marks are generated on the sheet surface to spoil the product.

Recently, since quality of such sheets is improved in accordance with technical advancement in molding and compounding, problems of flow mark on the sheet surface are increasingly recognized, and thus there is a growing demand of developing a technology for decreasing flow marks. Thus, one of the shortcomings of conventional processing aids is generation of flow mark. Therefore, a processing aid which makes it possible to promote gelation of a vinyl chloride resin with preventing flow mark generation and decreasing air marks has excellent industrial applicability.

Some acrylic polymer processing aids containing methyl methacrylate as a main component are proposed as a means for promoting gelation at mold-processing a vinyl chloride resin without lowering mechanical properties and transparency of molded articles, or for improving fluidity and secondary moldability.

For example, the processing aid disclosed in Japanese Examined Patent Publication No. 1745/1977 is one having excellent dispersibility in not only hard vinyl chloride but also soft vinyl chloride. The processing aid refers to (1) a two-step polymer comprising (A) 51 to 99 % by weight of a copolymer component containing 55 to 90 % by weight of methyl methacrylate, 10 to 45 % by weight of acrylic ester and 0 to 20 % by weight of another monomer copolymerizable therewith; and (B) 1 to 49 % by weight of a poly(methyl methacrylate) component, wherein the two-step polymer is obtained by polymerizing monomer components of (A) and adding monomer components of (B) to the polymerization system to polymerize the same, or by polymerizing monomer components of (B) and adding monomer components of (A) to the polymerization system to polymerize the same. Alternatively, the processing aid refers to (2) a polymer mixture comprising (A) 51 to 99 % by weight of a copolymer component containing 55 to 90 % by weight of methyl methacrylate, 10 to 45 % by weight of acrylic ester and 0 to 20 % by weight of another monomer copolymerizable therewith and (B) 1 to 49 % by weight of poly(methyl methacrylate) component, wherein the polymer mixture is obtained by emulsion polymerizing (A) and (B) separately, blending the two in a latex state to coagulate the mixture.

Similarly, the processing aid disclosed in Japanese Examined Patent Publication No. 2898/1978 is one having excellent dispersibility in not only hard vinyl chloride but also soft vinyl chloride. The processing aid refers to (1) a two-step polymer comprising (A) 51 to 99 % by weight of a copolymer component containing 55 to 90 % by weight of methyl methacrylate, 10 to 45 % by weight of acrylic ester and 0 to 20 % by weight of another monomer copolymerizable therewith; and (B) 1 to 49 % by weight of a component containing at least 90 % by weight of methyl methacrylate and at most 10 % by weight of another monomer copoymerizable therewith, wherein the two-step polymer is obtained by polymerizing monomer components of (A) and adding monomer components of (B) to the polymerization system to polymerize the same, or by polymerizing monomer components of (B) and adding monomer components of (A) to the polymerization system to polymerize the same. Alternatively, the processing aid refer to (2) a polymer mixture comprising (A) 51 to 99 % by weight of a copolymer component containing 55 to 90 % by weight of methyl methacrylate, 10 to 45 % by weight of acrylic ester and 0 to 20 % by weight of another monomer copolymerizable therewith and (B) 1 to 49 % by weight of a component containing at least 90 % by weight of methyl methacrylate and at most 10 % by weight of another monomer copoymerizable therewith, wherein the polymer mixture is obtained by emulsion polymerizing (A) and (B) separately, blending the two in a latex state to coagulate the mixture.

The resin compositions in the above publications are excellent in processability, in which gelation of vinyl chloride can be promoted without lowering properties of the vinyl chloride resin. In addition, surface appearance, transparency, secondary processability of molded articles obtained therefrom is excellent, while air mark generation is prevented. However, the resin compositions also have a defect that flow marks are generated on the calender sheet surface to spoil the product in case of processing by calender molding.

The present invention relates to a processing aid capable of preventing air mark generation as well as flow mark generation at molding and a vinyl chloride resin composition, which is different from the above conventional techniques.

As a result of intensive studies on processing aids which can solve the problem of flow mark generation and which are effective in reducing air marks at molding a vinyl chloride resin into a sheet, it has been found that a particular copolymer mixture exhibits a specific effect on solving these problems. Furthermore, it has been found that improvement effect on processability, i.e., air mark reduction at molding a sheet is achieved and that flow mark generation is significantly prevented by adding a particular amount of the above copolymer mixture to a vinyl chloride resin as a processing aid, and the present invention has been completed.

That is, the present invention relates to a processing aid for a vinyl chloride resin comprising a copolymer composition containing, (A) 70 to 99 parts by weight of a copolymer obtainable by polymerizing a monomer mixture comprising 70 to 95 % by weight of methyl methacrylate, 5 to 30% by weight of an aromatic vinyl compound and 0 to 30 % by weight of another monomer copolymerizable with these components, the copolymer having a specific viscosity at 30°C of 0.3 to 1.8 when 0.4 g of the copolymer is dissolved in 100 ml of toluene; and (B) 1 to 30 parts by weight of a copolymer obtainable by polymerizing a monomer mixture comprising 0 to 60 % by weight of methyl methacrylate, 40 to 100 % by weight of methacrylic ester other than methyl methacrylate and/or 40 to 99 % by weight of acrylic ester, and 0 to 50 % by weight of another monomer copolymerizable with these components, the total amount of (A) and (B) being 100 parts by weight, wherein the copolymer composition has a specific viscosity at 30°C of 0.3 to 2.0 when 0.4 g of the copolymer composition is dissolved in 100 ml of toluene and wherein said copolymer composition is obtainable by polymerizing said monomer mixture of the copolymer (B) in the presence of the copolymer (A).

It is preferable that the copolymer composition has a specific viscosity at 30°C of 0.4 to 1.5 when 0.4 g of the copolymer composition is dissolved in 100 ml of toluene.

The present invention also relates to a vinyl chloride resin composition comprising 100 parts by weight of a vinyl chloride resin and 0.1 to 20 parts by weight of the processing aid for a vinyl chloride resin.

The processing aid for a vinyl chloride resin of the present invention comprises a copolymer mixture containing, (A) 70 to 99 parts by weight of a copolymer obtainable by polymerizing a monomer mixture comprising 70 to 95 % by weight of methyl methacrylate, 5 to 30 % by weight of an aromatic vinyl compound and 0 to 30 % by weight of another monomer copolymerizable with these components, the copolymer having a specific viscosity at 30°C of 0.3 to 1.8 when 0.4 g of the copolymer is dissolved in 100 ml of toluene; and (B) 1 to 30 parts by weight of a copolymer obtainable by polymerizing a monomer mixture comprising 0 to 60 % by weight of methyl methacrylate, 40 to 100 % by weight of methacrylic ester other than methyl methacrylate and/or 40 to 99 % by weight of acrylic ester, and 0 to 50 % by weight of another monomer copolymerizable with these components, the total amount of (A) and (B) being 100 parts by weight, wherein the copolymer mixture has a specific viscosity at 30°C of 0.3 to 2.0 when 0.4 g of the copolymer composition is dissolved in 100 ml of toluene and wherein said copolymer composition is obtainable by polymerizing said monomer mixture of the copolymer (8) in the presence of the copolymer (A). The present invention is characterized by the findings that a particular copolymer mixture exhibits a specific effect on solving the problems based on the idea of promoting gelation at melt processing without lowering excellent physical and chemical properties of vinyl chloride resins and solving flow mark generation problems with maintaining air mark reduction at molding a sheet, which is an inherent property of processing aids.

The ratio of methyl methacrylate in the copolymer (A) of the present invention is 70 to 95 % by weight, preferably 75 to 90 % by weight. When the ratio is out of this range, there is a tendency that the effect on promoting gelation is insufficient even if the composition is added to a vinyl chloride resin and inherent transparency of vinyl chloride resin is deteriorated.

The ratio of aromatic vinyl compound in the copolymer (A) is 5 to 30 % by weight, preferably 10 to 25 % by weight. When the ratio is out of this range, there is a tendency that the effect on promoting gelation is insufficient even if the composition is added to a vinyl chloride resin and inherent transparency of vinyl chloride resin is deteriorated.

Examples of aromatic vinyl compounds are styrene, α-methyl styrene, chlorostyrene, vinyl styrene and nucleophilic-substituted styrene. They are used alone or in combination of two or more. Among these, styrene is particularly preferable since it is industrially available without difficulty.

The ratio of another copolymerizable monomer in the copolymer (A) of the present invention is 0 to 30 % by weight, preferably 0 to 20 % by weight, more preferably 0 to 10 % by weight. When the ratio is out of this range, there is a tendency that the effect on promoting gelation is insufficient even if the composition is added to a vinyl chloride resin and inherent transparency of vinyl chloride resin is deteriorated.

Examples of another copolymerizable monomer in the copolymer (A) are methacrylic esters containing an alkyl group having 1 to 18 carbon atoms, such as ethyl methacrylate, n-butyl methacrylate, iso-butyl methacrylate, tert-butyl methacrylate, 2-ethylhexyl methacrylate, lauryl methacrylate, stearyl methacrylate, tridecyl methacrylate, benzyl methacrylate and cyclohexyl methacrylate; acrylic esters containing an alkyl group having 1 to 18 carbon atoms, such as methyl acrylate, ethyl acrylate, n-butyl acrylate, lauryl acrylate, stearyl acrylate, 2-ethylhexyl acrylate, benzyl acrylate and cyclohexyl acrylate; unsaturated nitrile such as acrylonitrile and methacrylonitrile; methacrylic esters containing an epoxy group, such as glycidyl methacrylate; methacrylic esters containing a hydroxy group, such as 4-hydroxybutyl methacrylate, hydroxypropyl methacrylate and hydroxyethyl methacrylate; multifunctional monomers such as divinyl benzene and allyl methacrylate. Among these, glycidyl methacrylate is preferable from the viewpoint of the effect on promoting gelation when the composition is added to a vinyl chloride resin. They are used alone or in combination of two or more.

The ratio of methyl methacrylate in the copolymer (B) of the present invention is 0 to 60 % by weight, preferably 5 to 50 % by weight, more preferably 10 to 40 % by weight. When the ratio is out of this range, there is a tendency that the effect on promoting gelation is insufficient even if the composition is added to a vinyl chloride resin and inherent transparency of vinyl chloride resin is deteriorated.

The ratio of methacrylic ester other than methyl methacrylate in the copolymer (B) of the present invention is 40 to 100 % by weight, preferably 50 to 95 % by weight, more preferably 60 to 90 % by weight. When the ratio is out of this range, there is a tendency that the effect on promoting gelation is insufficient, even if the composition is added to a vinyl chloride resin, non-gelled substances remain in the sheet, and inherent transparency of vinyl chloride resin is deteriorated.

Examples of methacrylic ester other than methyl methacrylate are methacrylic esters containing an alkyl group having 2 to 18 carbon atoms, such as ethyl methacrylate, n-butyl methacrylate, iso-butyl methacrylate, tert-butyl methacrylate, 2-ethylhexyl methacrylate, lauryl methacrylate, stearyl methacrylate, tridecyl methacrylate, benzyl methacrylate and cyclohexyl methacrylate. Among these, butyl methacrylate is particularly preferable. They are used alone or in combination of two or more. The ratio of acrylic ester in the copolymer (B) of the present invention is 40 to 99 % by weight, preferably 50 to 95 % by weight, more preferably 60 to 90 % by weight. When the ratio is out of this range, there is a tendency that the effect on promoting gelation is insufficient, even if the composition is added to a vinyl chloride resin, non-gelled substances remain in the sheet, and inherent transparency of vinyl chloride resin is deteriorated.

Examples of acrylic esters are acrylic esters containing an alkyl group having 1 to 18 carbon atoms, such as methyl acrylate, ethyl acrylate, n-butyl acrylate, lauryl acrylate, stearyl acrylate, 2-ethylhexyl acrylate, benzyl acrylate and cyclohexyl acrylate. Among these, butyl acrylate is preferable, since it is industrially available without difficulty. They are used alone or in combination of two or more. Either or both of methacrylic ester other than methyl methacrylate and acrylic ester may be used.

The ratio of another copolymerizable monomer in the copolymer (B) is 0 to 50 % by weight, preferably 0 to 40 % by weight, more preferably 0 to 30 % by weight. When the ratio is out of this range, there is a tendency that the effect on promoting gelation is insufficient, even if the composition is added to a vinyl chloride resin, non-gelled substances remain in the sheet, and inherent transparency of vinyl chloride resin is deteriorated.

Examples of another copolymerizable monomer in the copolymer (B) are aromatic vinyl compounds such as styrene, α-methyl styrene, chlorostyrene, vinyl styrene and nucleophilic-substituted styrene; unsaturated nitrile such as acrylonitrile and methacrylonitrile; methacrylic esters containing an epoxy group, such as glycidyl methacrylate; methacrylic esters containing a hydroxy group, such as 4-hydroxybutyl methacrylate, hydroxypropyl methacrylate and hydroxyethyl methacrylate; multifunctional monomers such as divinyl benzene and allyl methacrylate. At least one of these other copolymerizable monomers may be used as long as practical problems are not caused in relation to air mark and flow mark prevention, which is the property of the processing aid of the present invention. Among these, styrene is preferable from the viewpoint that non-gelled substances remaining in the sheet does not increase.

The specific viscosity of the copolymer (A) of the present invention (measured at 30°C by dissolving 0.4 g of the copolymer (A) in 100 ml of toluene) is 0.3 to 1.8, preferably 0.4 to 1.5, more preferably 0.5 to 1.5.

When the specific viscosity of the copolymer (A) of the present invention is less than 0.3, not only effect on air mark prevention at molding a sheet, which is the characteristics of the present invention, tends to become insufficient, but also promoting effect on gelation of the vinyl chloride resin tends to be lowered. On the other hand, when the specific viscosity is more than 1.8, flow marks tend to be generated to such a degree that a practical problem is caused.

The specific viscosity of the copolymer mixture of the present invention (measured at 30°C by dissolving 0.4 g of the polymer in 100 ml of toluene) is 0.3 to 2.0, preferably 0.4 to 1.5, more preferably 0.5 to 1.2.

When the specific viscosity of the copolymer mixture of the present invention is less than 0.3, not only effect on air mark prevention at molding a sheet, which is the characteristics of the present invention, tends to become insufficient, but also promoting effect on gelation of the vinyl chloride resin tends to be lowered. On the other hand, when the specific viscosity is more than 2.0, flow marks tend to be generated to such a degree that a practical problem is caused.

Specific viscosity can be adjusted by polymerization conditions. For example, the specific viscosity can be increased by reducing the amount of a polymerization initiator or lowering the polymerization temperature, whereas the specific viscosity can be decreased by increasing the amount of a polymerization initiator or raising the polymerization temperature. Although it would be possible to obtain the copolymer (A) and the copolymer (B) by separate polymerizations, in the present invention the polymerization of the copolymer (A) is carried out, then followed by polymerization with adding the monomer mixture of copolymer (B) in the presence of the copolymer (A). The latter is more convenient and shows superior improving effect on processability.

The content of the copolymer (A) is 70 to 99 parts by weight, preferably 75 to 95 parts by weight, more preferably 80 to 90 parts by weight based on 100 parts by weight of the copolymer composition of the present invention. When the content of the copolymer (A) is less than 70 parts by weight, there is a tendency that the effect on promoting gelation is insufficient even if the composition is added to a vinyl chloride resin. When the content is more than 99 parts by weight, non-gelled substances tend to remain in the sheet.

The processing aid used in the present invention can be obtained by emulsion-polymerizing the monomer mixtures in the presence of an emulsifier, a chain transfer agent, a polymerization initiator and the like.

As the emulsifier, any known emulsifier may be used, and examples thereof include anionic surfactants such as a fatty acid salt, an alkyl sulfate, an alkyl benzene sulfonate, an alkyl phosphate, and a salt of diester of sulfosuccinic acid; non-ionic surfactants such as a polyoxyethylene alkyl ether and a polyoxyethylene fatty acid ester and a glycerin fatty acid ester; and cationic surfactants such as an alkyl amine salt.

As the polymerization initiator, a water-soluble, oil-soluble, or a redox polymerization initiator may be used. For example, usual inorganic initiators such as a persulfate, an organic peroxide or an azo compound may be used alone. Alternatively, these compounds may be used in combination with a sulfite, hydrogen sulfite, thiosulfate, a primary metal salt, sodium formaldehyde sulfoxylate and the like, as a redox initiator. Particularly preferable initiators include sodium persulfate, potassium persulfate, ammonium persulfate and the like. Preferable organic peroxides include t-butyl hydroperoxide, cumene hydroperoxide, benzoyl peroxide, lauroyl peroxide and the like.

As the chain transfer agents, any known chain transfer agent may be used. For example, an alkyl mercaptan having 4 to 12 carbon atoms in the main chain is preferable. Concrete examples thereof include n-octyl mepcaptan, t-octyl mercaptan, t-dodecyl mercaptan and the like.

As the vinyl chloride resin for the vinyl chloride resin composition of the present invention, any conventional vinyl chloride resin can be used without particular limitation. Concrete examples thereof include poly(vinyl chloride), a copolymer of preferably at least 80 % by weight of vinyl chloride and at most 20 % by weight of a monomer copolymerizable therewith, such as vinyl acetate, propylene, styrene and acrylic ester, and a post-chlorinated poly(vinyl chloride). These may be used alone or in combination of two or more.

The ratio of the processing aid to the vinyl chloride resin in the composition of the present invention is 0.1 to 20 parts by weight, preferably 0.2 to 10 parts by weight, more preferably 0.3 to 5 parts by weight based on 100 parts by weight of the vinyl chloride resin. When the amount is less than 0.1 part by weight, there is a tendency that problems arise with respect to effect on air mark prevention and effect on promoting gelation of the vinyl chloride resin. When the amount is more than 20 parts by weight, there is a tendency that the problem of flow mark arises, and a heavy load is imposed on the motor of the processing machine due to the remarkable increase of the melt viscosity

Examples of methods of recovering the copolymer mixture from the copolymer mixture latex include a method of recovering a powdery copolymer mixture, which comprises coagulating the copolymer mixture by using acid such as sulfuric acid, hydrochloric acid or phosphoric acid, or salting out the copolymer mixture by using salt electrolytes such as calcium chloride, magnesium chloride, aluminum chloride, magnesium sulfate or aluminum sulfate, then followed by heat-treating, washing, dehydrating and drying. Furthermore, recovering methods such as spray drying and lyophilization may also be applicable.

The vinyl chloride resin composition of the present invention may be incorporated with a stabilizer, a lubricant, a impact modifier, a plasticizer, a colorant, a filler, a blowing agent and the like as long as the effect of the present invention is maintained.

By using the composition of the present invention, glossy sheets of molded articles can be prepared while reducing air mark and preventing flow mark.

In the followings, the present invention is explained in detail by means of examples, but the invention is not limited to these examples.

### EXAMPLE 1

First, 190 parts by weight of water, 0.3 part by weight of potassium palmitate and 0.1 part by weight of potassium persulfate were mixed. A monomer mixture solution (1) comprising 75 parts by weight of methyl methacrylate and 15 parts by weight of styrene was continuously added to the mixture over 5 hours at 62°C, followed by 1 hour of stirring polymerization to obtain a copolymer (A). Subsequently, a monomer mixture solution (2) comprising 5 parts by weight of methyl methacrylate and 5 parts by weight of butyl acrylate was continuously added thereto over 1 hour, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the following tests. The results are shown in Table 1.

### (i) Measurement of specific viscosity

The obtained copolymer or the copolymer mixture was precisely weighed in an amount of 0.4 g and dissolved in 100 ml of toluene to measure specific viscosity in a water bath of 30°C by using a Ubbelohde's viscometer adjusted to a fixed temperature.

### (ii) Flow mark test

Evaluation of flow mark was carried out by visual observation. A roll sheet (thickness: 0.5 mm, width: 35 cm) was prepared by kneading a resin composition for 3 minutes by using an 8-inch laboratory test roll at roll temperature of 200°C and rotation speeds of 17 rpm for the front roll and 16 rpm for the rear roll, and used as an evaluation sample. The roll sheet was observed and evaluated according to 5 scales: " 5" refers to the case where flow mark is hardly observed, "4" a very small number of flow marks are observed, "3" flow marks are observed but there is no practical problem, "2" flow marks are generated and there are practical problems, and "1" generation of flow marks is remarkable.

The resin composition used for this flow mark evaluation was a vinyl chloride resin composition obtained by adding 2 parts by weight of the obtained powdery copolymer mixture to a composition prepared by mixing, by using a Henschel mixer, 100 parts by weight of poly(vinyl chloride) resin having an average polymerization degree of 800 (Kanevinyl S-1008 available from Kaneka Corporation), 1.3 parts by weight of an octyl tin stabilizer (FD-90 available from Akishima Chemical Industry Co. Ltd.), 0.6 part by weight of a high molecular fatty acid ester (Loxiol G-78 available from Cognis Japan Ltd.), 0.6 part by weight of a polyol ester (Loxiol GH-4 available from Cognis Japan Ltd.) and 12 parts by weight of an impact modifier (Kaneace B-51 available from Kaneka Corporation) so that the temperature of the resin becomes 110°C and then cooling the same to room temperature.

### (iii) Air mark test

Evaluation of air mark was carried out by visual observation. A roll sheet (thickness: 1.0 mm, width: 30 cm) was prepared by kneading a resin composition for 3 minutes by using an 8-inch laboratory test roll at roll temperature of 180°C and rotation speeds of 15 rpm for the front roll and 16 rpm for the rear roll, and used as an evaluation sample. The roll sheet was observed and evaluated according to 5 scales: "5" refers to the case where no air mark is observed, "4" air mark is hardly observed, "3" air marks are observed but there is no practical problem, "2" air marks are generated and there are practical problems, and "1" generation of air marks is remarkable.

The resin composition used for this air mark evaluation was a vinyl chloride resin composition obtained by adding 2 parts by weight of the obtained powdery copolymer mixture to a composition prepared by mixing, by using a Henschel mixer, 100 parts by weight of poly(vinyl chloride) resin having an average polymerization degree of 800 (Kanevinyl S-1008 available from Kaneka Corporation), 1.2 parts by weight of an octyl tin stabilizer (T-17MOK available from Kyodo Chemical Co., Ltd.), 1.6 part by weight of a high molecular fatty acid ester (Loxiol G-74 available from Cognis Japan Ltd.), 0.9 part by weight of a polyol ester (Loxiol G-16 available from Cognis Japan Ltd.) and 10 parts by weight of an impact modifier (Kaneace B-51 available from Kaneka Corporation) so that the temperature of the resin becomes 110°C and then cooling the same to room temperature.

### (iv) Gloss evaluation test

For evaluating gloss, measurement was carried out by using glossimeter of 60°. A roll sheet (thickness: 0.4 mm, width: 33 cm) was prepared by kneading a resin composition for 2 minutes by using an 8-inch laboratory test roll at roll temperature of 194°C and rotation speeds of 17 rpm for the front roll and 16 rpm for the rear roll, and used as an evaluation sample. The gloss of the roll sheet was observed and evaluated according to 5 scales: "1" refers to the case where the gloss value was less than 105; "2" at least 105 to less than 110; "3" at least 110 to less than 115; "4" at least 115 to less than 120; and "5" at least 120.

The resin composition used for this gloss evaluation was a vinyl chloride resin composition obtained by adding 2 parts by weight of the obtained powdery copolymer mixture to a composition prepared by mixing, by using a Henschel mixer, 100 parts by weight of poly(vinyl chloride) resin having an average polymerization degree of 800 (Kanevinyl S-1008 available from Kaneka Corporation), 1 part by weight of an butyl tin stabilizer (17M available from Ciba Geigy), 0.4 part by weight of a high molecular fatty acid ester (Loxiol G-78 available from Cognis Japan Ltd.), 0.6 part by weight of a polyol fatty acid ester (Loxiol G-16 available from Cognis Japan Ltd.) and 6 parts by weight of an impact modifier (Kaneace B-521 available from Kaneka Corporation) so that the temperature of the resin becomes 110°C and then cooling the same to room temperature.

### (v) Fish eye (F.E.) test

The roll sheet having a thickness of 0.5 mm which was used for the flow mark evaluation was used for the F.E. evaluation. The number of F.E. in a fixed area was ascertained by visual observation, and evaluation was carried out according to 3 scales: "O" refers to the case of no F.E. without any practical problem; "Δ" refers to the case where F.E. is noticeable and there is a practical problem; and "×" refers to the case where the sheet has many F.E. and cannot be practically used.

### EXAMPLE 2

First, 190 parts by weight of water, 0.3 part by weight of potassium palmitate and 0.1 part by weight of potassium persulfate were mixed. A monomer mixture solution (1) comprising 67 parts by weight of methyl methacrylate and 13 parts by weight of styrene was continuously added to the mixture over 4.5 hours at 62°C, followed by 1 hour of stirring polymerization to obtain a copolymer (A). Subsequently, a monomer mixture solution (2) comprising 10 parts by weight of methyl methacrylate and 10 parts by weight of butyl acrylate was continuously added thereto over 2 hours, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the same property evaluations as in Example 1. The results are shown in Table 1.

### EXAMPLE 3

First, 190 parts by weight of water, 0.3 part by weight of potassium palmitate and 0.1 part by weight of potassium persulfate were mixed. A monomer mixture solution (1) comprising 72 parts by weight of methyl methacrylate, 9 parts by weight of styrene and 9 parts by weight of butyl acrylate was continuously added to the mixture over 5 hours at 62°C, followed by 1 hour of stirring polymerization to obtain a copolymer (A). Subsequently, a monomer mixture solution (2) comprising 5 parts by weight of methyl methacrylate and 5 parts by weight butyl acrylate was continuously added thereto over 1 hour, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the same property evaluations as in Example 1. The results are shown in Table 1.

### EXAMPLE 4

First, 190 parts by weight of water, 0.3 part by weight of potassium palmitate and 0.1 part by weight of potassium persulfate were mixed. A monomer mixture solution (1) comprising 72 parts by weight of methyl methacrylate, 9 parts by weight of styrene and 9 parts by weight of butyl methacrylate was continuously added to the mixture over 5 hours at 62°C, followed by 1 hour of stirring polymerization to obtain a copolymer (A). Subsequently, a monomer mixture solution (2) comprising 5 parts by weight of methyl methacrylate and 5 parts by weight of butyl acrylate was continuously added thereto over 1 hour, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the same property evaluations as in Example 1. The results are shown in Table 1.

### EXAMPLE 5

First, 190 parts by weight of water, 0.3 part by weight of potassium palmitate and 0.1 part by weight of potassium persulfate were mixed. A monomer mixture solution (1) comprising 72 parts by weight of methyl methacrylate, 9 parts by weight of styrene and 9 parts by weight of butyl acrylate was continuously added to the mixture over 5 hours at 62°C, followed by 1 hour of stirring polymerization to obtain a copolymer (A). Subsequently, a monomer mixture solution (2) comprising 5 parts by weight of butyl acrylate and 5 parts by weight of styrene was continuously added thereto over 1 hour, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the same property evaluations as in Example 1. The results are shown in Table 1.

### EXAMPLE 6

First, 190 parts by weight of water, 0.3 part by weight of potassium palmitate and 0.1 part by weight of potassium persulfate were mixed. A monomer mixture solution (1) comprising 70 parts by weight of methyl methacrylate, 10 parts by weight of styrene and 10 parts by weight of butyl acrylate was continuously added to the mixture over 5 hours at 62°C, followed by 1 hour of stirring polymerization to obtain a copolymer (A). Subsequently, a monomer mixture solution (2) comprising 5 parts by weight of methyl methacrylate, 5 parts by weight of butyl acrylate and 0.4 part by weight of t-dodecyl mercaptan was continuously added thereto over 1 hour, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the same property evaluations as in Example 1. The results are shown in Table 1.

### EXAMPLE 7

First, 190 parts by weight of water, 0.3 part by weight of potassium palmitate and 0.1 part by weight of potassium persulfate were mixed. A monomer mixture solution (1) comprising 8 parts by weight of methyl methacrylate and 2 parts by weight of styrene was continuously added to the mixture over 0.5 hour at 62°C, followed by 1 hour of stirring polymerization. Thereafter, a monomer mixture solution (2) comprising 56 parts by weight of methyl methacrylate and 24 parts by weight of styrene was continuously added thereto over 4.5 hours, followed by 1 hour of stirring polymerization to obtain a copolymer (A). Subsequently, a monomer mixture solution (3) comprising 5 parts by weight of methyl methacrylate and 5 parts by weight of butyl acrylate was continuously added thereto over 1 hour, followed by 3 hours of stirring polymerization to obtain a copolymer (B). The reaction was finished, and a copolymer mixture latex comprising the copolymer (A) and the copolymer (B) was obtained. The obtained copolymer mixture latex was coagulated with an aqueous solution of hydrochloric acid, then heat-treated, washed, dehydrated and dried to obtain a powdery copolymer mixture. The powdery copolymer mixture was subjected to the same property evaluations as in Example 1. The results are shown in Table 1.

### COMPARATIVE EXAMPLE 1

A powdery copolymer mixture was obtained in the same manner as in Example 1 except that the monomer mixture solution (1) in Example 1 consisted of 90 parts by weight of methyl methacrylate. The powdery copolymer mixture was subjected to the same tests as in Example 1. The results are shown in Table 1.

### COMPARATIVE EXAMPLE 2

A powdery copolymer mixture was obtained in the same manner as in Example 1 except that the monomer mixture solution (1) in Example 1 was a mixed solution comprising 27 parts by weight of methyl methacrylate and 63 parts by weight of styrene. The powdery copolymer mixture was subjected to the same tests as in Example 1. The results are shown in Table 1.

### COMPARATIVE EXAMPLE 3

A powdery copolymer mixture was obtained in the same manner as in Example 1 except that the monomer mixture solution (1) in Example 1 was a mixed solution comprising 50 parts by weight of methyl methacrylate, 5 parts by weight of styrene and 35 parts by weight of butyl acrylate. The powdery copolymer mixture was subjected to the same tests as in Example 1. The results are shown in Table 1.

### COMPARATIVE EXAMPLE 4

A powdery copolymer mixture was obtained in the same manner as in Example 1 except that the monomer mixture solution (2) in Example 1 consisted of 10 parts by weight of methyl methacrylate. The powdery copolymer mixture was subjected to the same tests as in Example 1. The results are shown in Table 1.

### COMPARATIVE EXAMPLE 5

A powdery copolymer mixture was obtained in the same manner as in Example 1 except that the monomer mixture solution (1) in Example 1 was a mixed solution comprising 60 parts by weight of methyl methacrylate and 40 parts by weight of styrene, and that the monomer mixture solution (2) was not used. The powdery copolymer mixture was subjected to the same tests as in Example 1. The results are shown in Table 1.

### COMPARATIVE EXAMPLE 6

A powdery copolymer mixture was obtained in the same manner as in Example 1 except that the monomer mixture solution (1) in Example 1 was a mixed solution comprising 30 parts by weight of methyl methacrylate and 20 parts by weight of styrene and that the monomer mixture solution (2) was a mixed solution comprising 25 parts by weight of methyl methacrylate, 25 parts by weight of butyl acrylate and 2 parts by weight of t-dodecyl mercaptan. The powdery copolymer mixture was subjected to the same tests as in Example 1. The results are shown in Table 1.

### COMPARATIVE EXAMPLE 7

A powdery copolymer mixture was obtained in the same manner as in Example 1 except that the monomer mixture solution (1) in Example 1 was a mixed solution comprising 55 parts by weight of methyl methacrylate, 10 parts by weight of styrene, 5 parts by weight of butyl acrylate and 20 parts by weight of butyl methacrylate, and that the monomer mixture solution (2) was a mixed solution comprising 5 parts by weight of methyl methacrylate, 5 parts by weight of butyl acrylate and 0.5 part by weight of t-dodecyl mercaptan. The powdery copolymer mixture was subjected to the same tests as in Example 1. The results are shown in Table 1.

### COMPARATIVE EXAMPLE 8

A powdery copolymer mixture was obtained in the same manner as in Example 1 except that the amount of potassium persulfate in Example 1 was changed to 0.07 part by weight, the monomer mixture solution (1) in Example 1 was a mixed solution comprising 62 parts by weight of methyl methacrylate, 9 parts by weight of styrene and 9 parts by weight of butyl acrylate, and that the monomer mixture solution (2) was a mixed solution comprising 4 parts by weight of methyl methacrylate and 16 parts by weight of butyl acrylate. The powdery copolymer mixture was subjected to the same tests as in Example 1. The results are shown in Table 1.

### REFERENCE EXAMPLE 1

To the vinyl chloride resin compounding in Example 1 was added 0.05 part by weight of the powdery copolymer mixture obtained in Example 1. The obtained resin composition was subjected to the same tests as in Example 1. The results are shown in Table 1.

### REFERENCE EXAMPLE 2

To the vinyl chloride resin compounding in Example 1 was added 25 part by weight of the powdery copolymer mixture obtained in Example 1. The obtained resin composition was subjected to the same tests as in Example 1. The results are shown in Table 1.

**TABLE 1**

| Copolymer A MMA/St/BA/BMA (part) | | | Copolymer B MMA/St/BA /t-DM (part) | Amount of copolymer mixture (part) | Specific viscosity of copolymer A η sp | Specific viscosity of copolymer mixture η sp | Gloss | Flow mark | Air mark | F. E. |
|---|---|---|---|---|---|---|---|---|---|---|
| | first step | second step | | | | | | | | |
| Ex. 1 | 75/15/0/0 | - | 5/0/5/0 | 2 | 0.74 | 0.79 | 5 | 5 | 5 | ○ |
| Ex. 2 | 67/13/0/0 | - | 10/0/10/0 | 2 | 0.73 | 0.83 | 5 | 5 | 4 | ○ |
| Ex.3 | 72/9/9/0 | - | 5/0/5/0 | 2 | 0.93 | 1.03 | 5 | 4 | 5 | ○ |
| Ex. 4 | 72/9/0/9 | - | 5/0/5/0 | 2 | 1.04 | 1.10 | 5 | 4 | 5 | ○ |
| Ex. 5 | 72/9/9/0 | - | 0/5/5/0 | 2 | 0.91 | 0.98 | 5 | 5 | 5 | ○ |
| Ex. 6 | 70/10/10/0 | - | 5/0/5/0.4 | 2 | 0.86 | 0.83 | 5 | 5 | 5 | ○ |
| Ex. 7 | 8/2/0/0 | 56/24/0/0 | 5/0/5/0 | 2 | 0.73 | 0.76 | 5 | 5 | 5 | ○ |
| Com. Ex. 1 | 90/0/0/0 | - | 5/0/5/0 | 2 | 1.08 | 1.15 | 5 | 2 | 5 | ○ |
| Com. Ex. 2 | 27/63/0/0 | - | 5/0/5/0 | 2 | 0.57 | 0.65 | 2 | 5 | 3 | ○ |
| Com. Ex. 3 | 50/5/35/0 | - | 5/0/5/0 | 2 | 1.54 | 1.67 | 2 | 3 | 4 | ○ |
| Com. Ex. 4 | 75/15/0/0 | - | 10/0/0/0 | 2 | 0.80 | 0.84 | 4 | 3 | 4 | × |
| Com. Ex. 5 | 60/40/0/0 | - | - | 2 | 0.58 | 0.63 | 4 | 3 | 4 | × |
| Com. Ex. 6 | 30/20/0/0 | - | 25/0/25/2 | 2 | 1.28 | 1.46 | 2 | 3 | 2 | Δ |
| Com. Ex. 7 | 55/10/5/20 | - | 5/0/5/0.5 | 2 | 2.05 | 1.82 | 4 | 1 | 4 | ○ |
| Com. Ex. 8 | 62/9/9/0 | - | 4/0/16/0 | 2 | 1.58 | 2.21 | 5 | 1 | 4 | ○ |
| Ref. Ex. 1 | 75/15/0/0 | - | 5/0/5/0 | 0.05 | 0.74 | 0.79 | 2 | 5 | 1 | Δ |
| Ref. Ex. 2 | 75/15/0/0 | - | 5/0/5/0 | 25 | 0.74 | 0.79 | 5 | 1 | 3 | Δ |

| | | | | | | | | | | |
|---|---|---|---|---|---|---|---|---|---|---|
| MMA: methyl methacrylate St: styrene BA: butyl acrylate BMA: butyl methacrylate t-DM: t-dodecyl mercaptan | | | | | | | | | | |

The vinyl chloride resin composition containing the processing aid of the present invention has excellent physical properties inherent in vinyl chloride resins and good gelation property at mold-processing, and makes it possible to reduce air marks and prevent flow mark generation at molding a sheet, and thus has a significant industrial value.

## Claims

1. A processing aid for a vinyl chloride resin comprising a copolymer composition containing;
(A) 70 to 99 parts by weight of a copolymer obtainable by polymerizing a monomer mixture comprising 70 to 95 % by weight of methyl methacrylate, 5 to 30 % by weight of an aromatic vinyl compound and 0 to 30 % by weight of another monomer copolymerizable with these components, said copolymer having a specific viscosity at 30°C of 0.3 to 1.8 when 0.4 g of said copolymer is dissolved in 100 ml of toluene; and
(B) 1 to 30 parts by weight of a copolymer obtainable by polymerizing a monomer mixture comprising 0 to 60 % by weight of methyl methacrylate, 40 to 100 % by weight of methacrylic ester other than methyl methacrylate and/or 40 to 99 % by weight of acrylic ester, and 0 to 50 % by weight of another monomer copolymerizable with these components,
the total amount of (A) and (B) being 100 parts by weight,
wherein said copolymer composition has a specific viscosity at 30°C of 0.3 to 2.0 when 0.4 g of said copolymer composition is dissolved in 100 ml of toluene and
wherein said copolymer composition is obtainable by polymerizing said monomer mixture of the copolymer (B) in the presence of the copolymer (A).

2. The processing aid for a vinyl chloride resin of Claim 1, wherein said copolymer composition has a specific viscosity at 30°C of 0.4 to 1.5 when 0.4 g of said copolymer composition is dissolved in 100 ml of toluene.

3. A vinyl chloride resin composition comprising 100 parts by weight of a vinyl chloride resin and 0.1 to 20 parts by weight of the processing aid for a vinyl chloride resin of Claim 1 or 2.

## Patentansprüche

1. Verarbeitungshilfsmittel für ein Vinylchloridharz, umfassend eine Copolymerzusammensetzung, enthaltend:
(A) 70 bis 99 Gewichtsteile eines Copolymers, erhältlich durch Polymerisieren eines Monomergemischs, umfassend 70 bis 95 Gew.-% Methylmethacrylat, 5 bis 30 Gew.-% einer aromatischen Vinylverbindung und 0 bis 30 Gew.-% eines anderen, mit diesen Bestandteilen copolymerisierbaren Monomers, wobei das Copolymer eine spezifische Viskosität bei 30°C von 0,3 bis 1,8 aufweist, wenn 0,4 g des Copolymers in 100 ml Toluol gelöst werden; und
(B) 1 bis 30 Gewichtsteile eines Copolymers, erhältlich durch Polymerisieren eines Monomergemischs, umfassend 0 bis 60 Gew.-% Methylmethacrylat, 40 bis 100 Gew.-% von Methylmethacrylat verschiedenen Methacrylsäureester und/oder 40 bis 99 Gew.-% Acrylsäureester, und 0 bis 50 Gew.-% eines anderen, mit diesen Bestandteilen copolymerisierbaren Monomers,
wobei die Gesamtmenge von (A) und (B) 100 Gewichtsteile beträgt,
wobei die Copolymerzusammensetzung eine spezifische Viskosität bei 30°C von 0,3 bis 2,0 aufweist, wenn 0,4 g der Copolymerzusammensetzung in 100 ml Toluol gelöst werden, und
wobei die Copolymerzusammensetzung erhältlich ist durch Polymerisieren des Monomergemischs des Copolymers (B) in Gegenwart des Copolymers (A).

2. Verarbeitungshilfsmittel für ein Vinylchloridharz nach Anspruch 1, wobei die Copolymerzusammensetzung eine spezifische Viskosität bei 30°C von 0,4 bis 1,5 aufweist, wenn 0,4 g der Copolymerzusammensetzung in 100 ml Toluol gelöst werden.

3. Vinylchloridharzzusammensetzung, umfassend 100 Gewichtsteile eines Vinylchloridharzes und 0,1 bis 20 Gewichtsteile des Verarbeitungshilfsmittels für ein Vinylchloridharz nach Anspruch 1 oder 2.

## Revendications

1. Adjuvant de traitement pour une résine de chlorure de vinyle comprenant une composition de copolymères contenant :
(A) 70 à 99 parties en masse d'un copolymère pouvant être obtenu par polymérisation d'un mélange de monomères comprenant 70 à 95 % en masse de méthacrylate de méthyle, 5 à 30 % en masse d'un composé vinylique aromatique et 0 à 30 % en masse d'un autre monomère copolymérisable avec ces composants, ledit copolymère ayant une viscosité spécifique à 30°C de 0,3 à 1,8 quand 0,4 g dudit copolymère est dissous dans 100 ml de toluène ; et
(B) 1 à 30 parties en masse d'un copolymère pouvant être obtenu par polymérisation d'un mélange de monomères comprenant 0 à 60 % en masse de méthacrylate de méthyle, 40 à 100 % en masse d'ester méthacrylique différent du méthacrylate de méthyle et/ou 40 à 99 % en masse d'ester acrylique, et 0 à 50 % en masse d'un autre monomère copolymérisable avec ces composants,
la quantité totale de (A) et (B) étant 100 parties en masse,
où ladite composition de copolymères a une viscosité spécifique à 30°C de 0,3 à 2,0 quand 0,4 g de ladite composition de copolymères est dissous dans 100 ml de toluène, et
où ladite composition de copolymères peut être obtenue par polymérisation dudit mélange de monomères du copolymère (B) en présence du copolymère (A).

2. Adjuvant de traitement pour une résine de chlorure de vinyle selon la revendication 1, où ladite composition de copolymères a une viscosité spécifique à 30°C de 0,4 à 1,5 quand 0,4 g de ladite composition de copolymères est dissous dans 100 ml de toluène.

3. Composition de résine de chlorure de vinyle comprenant 100 parties en masse d'une résine de chlorure de vinyle et 0,1 à 20 parties en masse de l'adjuvant de traitement pour une résine de chlorure de vinyle selon la revendication 1 ou 2.
